# EUROPEAN PATENT SPECIFICATION

(11) **EP 3 335 404 B1**
(45) Date of publication and mention of the grant of the patent: **31.03.2021**
(21) Application number: 15871299.2
(22) Date of filing: 28.12.2015
(51) Int. Cl.: H04M 1/247, G09B 21/00

(54) **BRAILLE DISPLAY TERMINAL, SYSTEM AND METHOD**
BRAILLEANZEIGEENDGERÄT, -SYSTEM UND -VERFAHREN
TERMINAL, SYSTÈME ET PROCÉDÉ D'AFFICHAGE EN BRAILLE

(30) Priority: 10.08.2015 CN 201510487902
(43) Date of publication of application: 20.06.2018
(73) Proprietor: BOE Technology Group Co., Ltd., Beijing 100015 (CN); Beijing BOE Optoelectronics Technology Co., Ltd., Beijing 100176 (CN)
(72) Inventor: YANG, Shengji, Beijing 100176 (CN); DONG, Xue, Beijing 100176 (CN); WANG, Haisheng, Beijing 100176 (CN); CHEN, Xiaochuan, Beijing 100176 (CN); ZHAO, Weijie, Beijing 100176 (CN); LIU, Yingming, Beijing 100176 (CN); XU, Rui, Beijing 100176 (CN); LIU, Jiantao, Beijing 100176 (CN); LI, Jing, Beijing 100176 (CN); XU, Jingbo, Beijing 100176 (CN); WANG, Yingzi, Beijing 100176 (CN)
(74) Representative: Cohausz & Florack
(86) International application number: PCT/CN2015/099154
(87) International publication number: WO 2017/024732

(56) References cited:
- WO-A1-2011/106520
- CN-A- 101 098 526
- CN-A- 104 506 733
- CN-A- 105 100 346
- JP-A- 2006 145 700
- US-A- 5 226 817
- US-A- 5 766 014
- US-A1- 2013 330 692

## Description

### CROSS-REFERENCES TO RELATED APPLICATIONS

This application claims the priority of Chinese Patent Application No. 201510487902.7, entitled "Braille Display Terminal, System and Method," filed on August 10, 2015.

### FIELD OF THE DISCLOSURE

The present disclosure relates to the field of display technologies and, more particularly, relates to a braille display terminal, system, and method.

### BACKGROUND

Blind people have inherent visual impairments and may only obtain outside information by sound or touch. A braille display terminal is an electro-mechanical device that outputs braille characters. The braille characters are specially designed for visually impaired users and may be sensed by tactile perception. With the help of braille display terminals, blind people can read texts. However, the texts displayed by braille terminals are often entered manually. Blind people may still need help from others to obtain required information, which is not convenient. US patent US 5 766 014 A discloses a binary information display apparatus which displays braille information with high accuracy by means of four braille pins, which are actuated by a stepping motor having a stepping angle of 45 DEG and, hence, eight step positions. The apparatus includes four pins; a triplet cam which acts on ends of three pins out of the four pins so as to independently urge such three pins to selectively project from a display surface of a pin-supporting member and to selectively retract the same behind the display surface; a stepping motor for rotating the triplet cam about an axis thereof; and a fourth cam portion which actuates the remainder of the four pins. The motor can perform consecutive seven steps at 45 DEG intervals, starting from a position where a rotation restricting projection on the fourth cam portion abuts a stopper step surface on the pin-supporting member, without causing rotation of the fourth cam portion. The state of the fourth pin is therefore not changed during such consecutive stepping of the stepping motor over seven steps. With the above-described structural arrangements and resulting operations thereof, it is possible to display eight types of braille information. Similarly, eight types of braille information can be displayed by reversing the motor. Consequently, sixteen types of braille information can be produced by the apparatus of this invention.

The disclosed method and system are directed to solve one or more problems set forth above and other problems.

### BRIEF SUMMARY OF THE DISCLOSURE

The present disclosure provides a braille display module, terminal and system. The features of the braille display module, terminal and system according to the present invention are defined in the independent claims, and the preferred features according to the present invention are defined in the dependent claims. One aspect of the present disclosure provides a braille display module, including a display panel, a plurality of pins and a plurality of pin-driving assemblies. Each pin-driving assembly corresponds with at least one pin and is for driving the at least one pin. The plurality of pins may be arranged at the display panel in an array form. A pin is driven by a corresponding pin-driving assembly to raise above the display panel to present information based on a control signal.

In some embodiments, the plurality of pin-driving assemblies may be a plurality of piezoelectric units. When a voltage is applied to a piezo unit based on the control signal, the piezo unit expands in volume, and drives a pin corresponding to the piezo unit to raise above the display panel.

In some embodiments, each of the plurality of pin-driving assemblies may include one or more rotating shafts and a motor.

In one embodiment, the pin-driving assembly may include one rotating shaft and the motor. The rotating shaft may have a protrusion on a circumferential surface. The rotating shaft may be coaxially installed on a driving shaft of the motor. A lower end of one pin contacting the rotating shaft so that the one pin is driven by the pin-driving assembly.

In another embodiment, the pin-driving assembly may include two rotating shafts and the motor. Each rotating shaft may have a first protrusion and a second protrusion on a circumferential surface. Each of two pins corresponding with one of the two rotating shafts. The first protrusions of the two rotating shafts may be at different locations on the circumferential surfaces of the two rotating shafts. The second protrusions of the two rotating shafts may be at a same location on the circumferential surfaces of the two rotating shafts. The two rotating shafts are coaxially installed on a driving shaft of the motor. The lower end of each of the two pins are respectively pushed by one of the two rotating shafts such that the two pins are driven by the pin-driving assembly.

Further, the pin-driving assembly may include one or more elastic members, each elastic member corresponding to one rotating shaft. An upper end of each elastic member are connected with a corresponding pin, and a lower end of the elastic member being in contact with the corresponding rotating shaft.

Another aspect of the present disclosure provides a braille display terminal, including: a communication module for receiving to-be-displayed information; a control module for generating control signals corresponding to the to-be-displayed information; and a braille display module for displaying information based on the control signals.

The braille display module may include a display panel, a plurality of pins, and a plurality of pin-driving assemblies. Each pin-driving assembly corresponds with at least one pin and is for driving the at least one pin. The plurality of pins may be arranged at the display panel in an array form. A pin is driven by a corresponding pin-driving assembly to raise above the display panel to present information based on a control signal.

In some embodiments, the plurality of pin-driving assemblies may be a plurality of piezoelectric units. When a voltage is applied to a piezo unit based on the control signal, the piezo unit expands in volume, and drives a pin corresponding to the piezo unit to raise above the display panel.

In some embodiments, each of the plurality of pin-driving assemblies may include one or more rotating shafts and a motor.

In one embodiment, the pin-driving assembly may include one rotating shaft and the motor. The rotating shaft may have a protrusion on a circumferential surface. The rotating shaft may be coaxially installed on a driving shaft of the motor. A lower end of one pin contacting the rotating shaft so that the one pin is driven by the pin-driving assembly.

In another embodiment, the pin-driving assembly may include two rotating shafts and the motor. Each rotating shaft may have a first protrusion and a second protrusion on a circumferential surface. Each of two pins corresponding with one of the two rotating shafts. The first protrusions of the two rotating shafts may be at different locations on the circumferential surfaces of the two rotating shafts. The second protrusions of the two rotating shafts may be at a same location on the circumferential surfaces of the two rotating shafts. The two rotating shafts are coaxially installed on a driving shaft of the motor. The lower end of each of the two pins are respectively pushed by one of the two rotating shafts such that the two pins are driven by the pin-driving assembly.

Further, the pin-driving assembly may include one or more elastic members, each elastic member corresponding to one rotating shaft. An upper end of each elastic member are connected with a corresponding pin, and a lower end of the elastic member being in contact with the corresponding rotating shaft.

Further, a pin may have stopping-blocks on a side wall of the pin.

The control module may further include: a braille conversion unit for converting the to-be-displayed information into braille information; and a control signal conversion unit for converting the braille information to the control signals.

The communication module may further include one of an infrared communication module, a Bluetooth communication module, and a wireless fidelity (WiFi) module.

The braille display terminal may further include an audio module for broadcasting displayed information.

Another aspect of the present disclosure provides a braille display system, including a wearable device for collecting data and generating to-be-displayed information based on the collected data; and a braille display terminal. The braille display terminal may include a communication module for receiving the to-be-displayed information from the wearable device; a control module for generating control signals corresponding to the to-be-displayed information; and a braille display module for displaying information based on the control signals.

The braille display module may include a display panel, a plurality of pins, and a plurality of pin-driving assemblies. Each pin-driving assembly corresponds with at least one pin and is for driving the at least one pin. The plurality of pins may be arranged at the display panel in an array form. A pin is driven by a corresponding pin-driving assembly to raise above the display panel to present information based on a control signal.

In some embodiments, the plurality of pin-driving assemblies may be a plurality of piezoelectric units. When a voltage is applied to a piezo unit based on the control signal, the piezo unit expands in volume, and drives a pin corresponding to the piezo unit to raise above the display panel.

In some embodiments, each of the plurality of pin-driving assemblies may include one or more rotating shafts and a motor.

In one embodiment, the pin-driving assembly may include one rotating shaft and the motor. The rotating shaft may have a protrusion on a circumferential surface. The rotating shaft may be coaxially installed on a driving shaft of the motor. A lower end of one pin contacting the rotating shaft so that the one pin is driven by the pin-driving assembly.

In another embodiment, the pin-driving assembly may include two rotating shafts and the motor. Each rotating shaft may have a first protrusion and a second protrusion on a circumferential surface. Each of two pins corresponding with one of the two rotating shafts. The first protrusions of the two rotating shafts may be at different locations on the circumferential surfaces of the two rotating shafts. The second protrusions of the two rotating shafts may be at a same location on the circumferential surfaces of the two rotating shafts. The two rotating shafts are coaxially installed on a driving shaft of the motor. The lower end of each of the two pins are respectively pushed by one of the two rotating shafts such that the two pins are driven by the pin-driving assembly.

Further, the pin-driving assembly may include one or more elastic members, each elastic member corresponding to one rotating shaft. An upper end of each elastic member are connected with a corresponding pin, and a lower end of the elastic member being in contact with the corresponding rotating shaft.

Further, a pin may have stopping-blocks on a side wall of the pin.

The control module may further include: a braille conversion unit for converting the to-be-displayed information into braille information; and a control signal conversion unit for converting the braille information to the control signals.

The communication module may further include one of an infrared communication module, a Bluetooth communication module, and a wireless fidelity (WiFi) module.

The braille display terminal may further include an audio module for broadcasting displayed information.

The wearable device may include at least one of a smart collar, a smart headset, smart glasses, a smart ring, and a smart watch.

The to-be-displayed information may include at least one of a position information, a navigation information, a road information, an environmental information, and a weather information.

The braille display may further include a voice recognition apparatus for receiving audio information from a user and generating a data retrieving instruction based on the received audio information. The wearable device may further generate the to-be-displayed information based on the data retrieving instruction.

Further, the voice recognition apparatus may be fully integrated with the wearable device.

The wearable device may collect data, generate to-be-displayed information based on the collected data, and send the to-be-displayed information to a braille display terminal. The braille display terminal generates control signals corresponding to the to-be-displayed information, and presents information based on the control signals.

### BRIEF DESCRIPTION OF THE DRAWINGS

The following drawings are merely examples for illustrative purposes according to various disclosed embodiments and are not intended to limit the scope of the present disclosure.
Figure 1 illustrates an exemplary computing system according to various embodiments of the present disclosure;
Figure 2 illustrates a structure diagram of an exemplary braille display terminal according to various embodiments of the present disclosure;
Figure 3 illustrates a structure diagram of another exemplary braille display terminal according to various embodiments of the present disclosure;
Figure 4 illustrates a structure diagram of an exemplary braille display module according to various embodiments of the present disclosure;
Figure 5a and Figure 5b illustrate structure diagrams of exemplary pin-driving assemblies according to various embodiments of the present disclosure;
Figure 6 illustrates a structure diagram of an exemplary braille display system according to various embodiments of the present disclosure;
Figure 7 illustrates a structure diagram of another exemplary braille display system according to various embodiments of the present disclosure; and
Figure 8 illustrates a structure diagram of an exemplary braille display process according to various embodiments of the present disclosure.

### DETAILED DESCRIPTION

Reference will now be made in detail to exemplary embodiments of the invention, which are illustrated in the accompanying drawings. Hereinafter, embodiments according to the disclosure will be described with reference to the drawings. Wherever possible, the same reference numbers will be used throughout the drawings to refer to the same or like parts. It is apparent that the described embodiments are some but not all of the embodiments of the present invention. Based on the disclosed embodiments, persons of ordinary skill in the art may derive other embodiments according to the present disclosure, all of which are within the scope of the present invention.

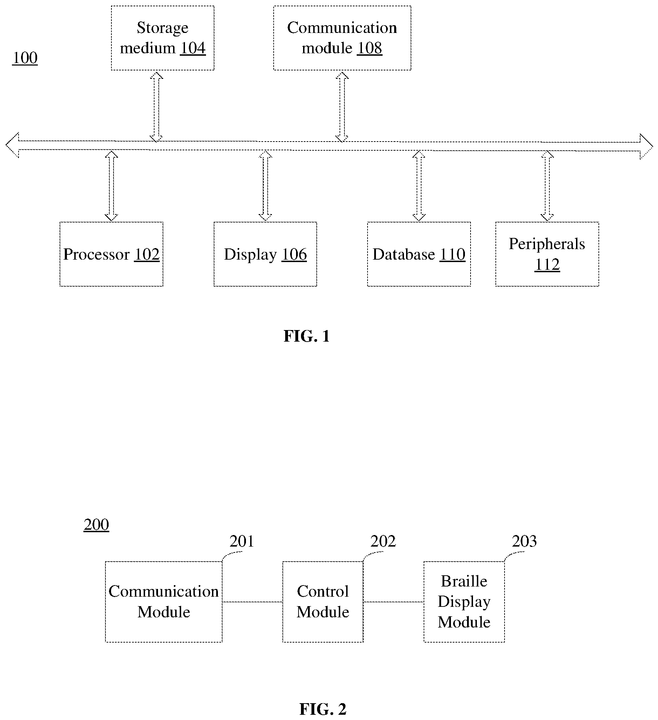

The present disclosure provides a braille display terminal, system and method. The braille display terminal, braille display system and braille display method may be implemented on any appropriate computing circuitry platform. Figure 1 illustrates a block diagram of an exemplary computing system according to various embodiments of the present disclosure.

Computing system 100 may include any appropriate type of computing systems, such as a personal computer (PC), a tablet or mobile computer, or a smart phone, etc. In addition, computing system 100 may be any appropriate content-presentation device capable of converting contents to signals corresponding to braille characters. Further, computing system 100 may be any appropriate device capable of collecting and transmitting data, such as a wearable device with sensors.

As shown in Figure 1, computing system 100 may include a processor 102, a storage medium 104, a display 106, a communication module 108, a database 110 and peripherals 112. Certain devices may be omitted and other devices may be included to better describe the relevant embodiments.

Processor 102 may include any appropriate processor or processors. Further, processor 102 can include multiple cores for multi-thread or parallel processing. Processor 102 may execute sequences of computer program instructions to perform various processes, such as voice recognition, signal processing, converting information into braille characters, etc. Storage medium 104 may include memory modules, such as ROM, RAM, flash memory modules, and mass storages, such as CD-ROM and hard disk, etc. Storage medium 104 may store computer programs for implementing various processes when the computer programs are executed by processor 102, such as computer programs for implementing a signal processing algorithm.

Further, communication module 108 may include certain network interface devices and hardware components for establishing connections through communication networks, such as cable network, wireless network (e.g., infrared, Bluetooth, WiFi), internet, etc. For example, communication module 108 may include an adapter and an antenna for sending and receiving signals from the communication networks. Database 110 may include one or more databases for storing certain data and for performing certain operations on the stored data, such as database searching. For example, database 110 may store a look-up table containing corresponding relationships between texts and braille representations of the texts.

Display 106 may provide information to users. Display 106 may include any appropriate type of computer display device or electronic device display such as LCD or OLED based devices. Display 106 may further include a braille display panel that provides information for visually impaired users. Peripherals 112 may include various sensors and other I/O devices, such as a GPS, a microphone, a speaker, a thermometer, etc.

In one embodiment, computing system 100 may receive data retrieving instructions to collect data from a peripheral 112. Processor 102 may process the collected data and transmit the data to another device through communication module 108. For example, computing system 100 may receive instructions to detect a distance to an obstacle on the road and send the detection result to a braille display terminal. In another example, computing system 100 may recognize a voice command and perform corresponding tasks based on the voice command, such as identifying a current location and sending it to a braille display terminal.

In another embodiment, computing system 100 may receive to-be-displayed information for further processing. The to-be-displayed information may be from locally stored data, data received from other sources over the network, or data inputted from peripherals 112, etc. Processor 102 may perform certain signal processing techniques to output the to-be-displayed information on a braille display terminal. For example, computing system 100 may receive and process a geographic location to be displayed by a braille display terminal.

Figure 2 illustrates a structure diagram of an exemplary braille display terminal according to various embodiments of the present disclosure. As shown in Figure 2, the braille display terminal 200 may include a communication module 201, a control module 202, and a braille display module 203.

The communication module 201 may be configured to receive to-be-displayed information. The communication module 201 may be, for example, implemented by communication module 108. The control module 202 may be configured to generate control signals corresponding to the to-be-displayed information. The control module 202 may be, for example, implemented by processor 102. The braille display module 203 may be configured to display the to-be-displayed information based on the control signals.

In operation, the communication module 201 may receive to-be-displayed information and send it to the control module 202. The control module 202 may generate control signals corresponding to the to-be-displayed information and send them to the braille display module 203. The braille display module 203 may display the information in braille based on the control signals. Therefore, visually impaired users may automatically acquire desired information, which may be widely adopted because of the improved convenience to the users.

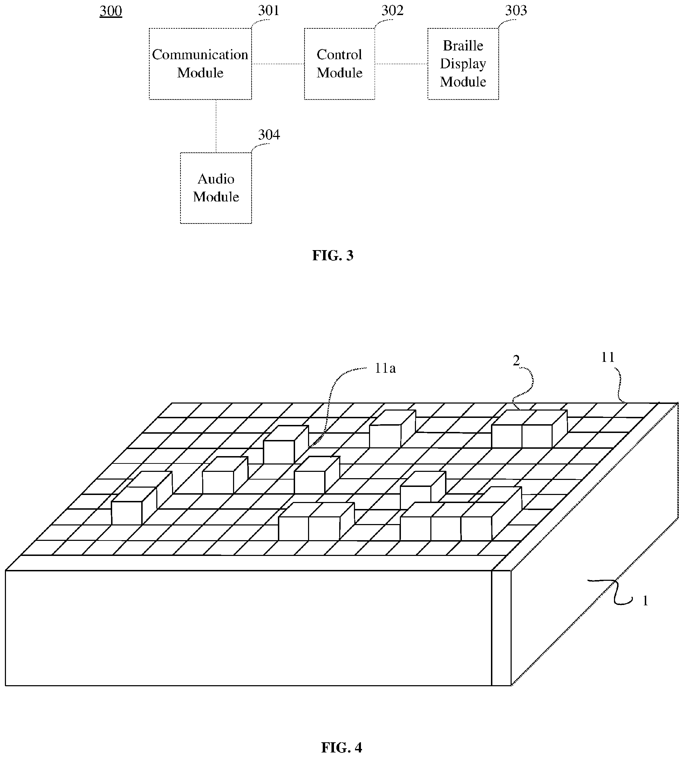

Figure 3 illustrates a structure diagram of another exemplary braille display terminal according to various embodiments of the present disclosure. As shown in Figure 3, the braille display terminal 300 may include a communication module 301, a control module 302, a braille display module 303 and an audio module 304.

The communication module 301 may be configured to receive to-be-displayed information. The communication module 201 may be, for example, implemented by communication module 108. The control module 302 may be configured to generate control signals corresponding to the to-be-displayed information. The control module 202 may be, for example, implemented by processor 102.

The braille display module 303 may be configured to display the information in braille based on the control signals. Figure 4 illustrates a structure diagram of an exemplary braille display module according to various embodiments of the present disclosure. The braille display module may be configured to display braille characters which are small rectangular blocks containing small palpable bumps (i.e., raised dots). The number and arrangement of these dots distinguish one character from another. For example, a braille character may be presented in a 6-dot block or an 8-dot block.

As shown in Figure 4, the braille display module may include a housing 1, pins 2 and pin-driving assemblies (not shown). The housing 1 may be a box with a depth for containing a plurality of pins 2 and a plurality of pin-driving assemblies (not shown). The housing 1 may include a display panel 11 configured on a top surface of the housing 1. The display panel 11 may be configured to include a plurality of through-holes 11a arranged in an array form.

A pin may be any properly shaped slender piece configured to fit the through-hole 11a and stand in the housing 1, such as a cuboid or a cylinder. Each pin corresponds to one through-hole 11a of the display panel 11 and may be pushed across and above the through-hole 11a to present a raised dot in a braille character. The cross section of a pin 2 may have a size compatible with the cross section of the through-hole 11a. In other words, a plurality of pins may be arranged at the display panel in an array form for presenting braille information.

A pin 2 may be driven by a corresponding pin-driving assembly to switch between two states: a raised state and a flat state. At the raised state, the pin 2 may pop out of the through-hole 11a and raise above the display panel 11 to represent a raised dot in a braille character. At the flat state, the top surface of the pin 2 may stay at a same or lower level as the display panel 11 to represent a flat dot in a braille character.

Pins 2 at the raised state (i.e., partially above the display panel 11) and pins 2 at the flat state (i.e., at a same or lower level as the display panel 11) may form arrays with alternating raised and flat dots on the display panel 11, which may display braille information. Visually impaired users may touch the display panel 11 and read the displayed information. For example, the display panel 11 may be divided into a plurality of blocks, each block including six pins 2 to represent a braille character. Further, the display panel 11 may be divided into multiple rows and columns of the character blocks. Thus, the display panel 11 may present a considerable amount of context at one time.

A pin-driving assembly may be configured to drive at least one pin 2. The pin-driving assemblies may be configured inside the housing 1 and below the display panel 11.

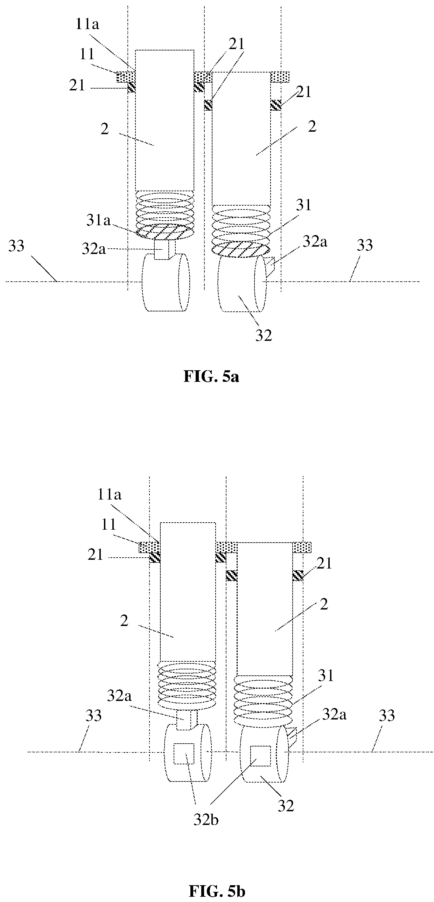

In one embodiment, each pin-driving assembly may drive one pin 2. Figure 5a illustrate a structure diagram of an exemplary pin-driving assembly according to this embodiment. As shown in Figure 5a, the pin-driving assembly on the left illustrates the situation when the pin 2 is at the raised state. The pin-driving assembly on the right illustrates the situation when a pin 2 is at the flat state.

The pin-driving assembly may include a spring 31, a rotating shaft 32 and a motor 33. The rotating shaft 32 may be a cylinder having a protrusion 32a on its circumferential surface. The motor 33 may include a driving shaft. The rotating shaft 32 is coaxially installed on the driving shaft of the motor 33. One end (i.e., the upper end) of the spring 31 is connected with the pin 2, and the other end (i.e., the lower end) of the spring 31 is in contact with the rotating shaft 32.

The control signals from the control module 202 may control the motor 33 to rotate, which may drive the rotating shaft 32 to rotate. As shown in Figure 5a, along with the rotation of the rotating shaft 32, the spring 31 may switch between directly contacting the circumferential surface of the rotating shaft 32 and indirectly contacting the circumferential surface of the rotating shaft 32 through the protrusion 32a. When the spring 31 directly contacts the circumferential surface of the rotating shaft 32, the pin 2 may move downward under the force of gravity and the pin 2 is at the flat state, as shown on the right of Figure 5a. When the spring 31 contacts the rotating shaft 32 through the protrusion 32a, the pin 2 may move upward under an elastic force of the spring 31, and the pin 2 may switch to the raised state, as shown on the left of Figure 5a.

It should be noted that in other embodiments, the spring 31 may be substituted by other types of elastic member or connector. The elastic member or the connector may be configured between the pin and the rotating shaft. An upper end of the elastic member or the connector is connected with the pin 2, and a lower end of the elastic member or the connector is in contact with the rotating shaft 32. Thus, the pin 2 may switch between the raised state and the flat state as the rotating shaft 32 rotates and contacts the elastic member or the connector with its different part.

Further, in some embodiments, the pin-driving assembly may not include the spring 31. In other words, the pin-driving assembly may be comprised of the rotating shaft 32 and the motor 33. The lower end of the pin 2 may directly contact the rotating shaft 32. When the lower end of the pin 2 contacts the protrusion 32a on the circumferential surface of the rotating shaft 32, the pin 2 is raised above the display panel 11. When the lower end of the pin 2 directly contacts the circumferential surface of the rotating shaft 32, the pin 2 is at the flat state. Thus, the pin 2 is driven by the pin-driving assembly to switch between the flat state and the raised state as the rotating shaft 32 rotates.

It is understood that the braille display module 203 may be implemented by common components such as pins, springs, rotating shafts and motors, which may reduce the cost of making the braille display module.

Further, a solid plate 31a may be configured at the lower end of the spring 31. The spring 31 may contact the rotating shaft 32 through the plate 31a, which may avoid the spring 31 bypassing the protrusion 32a and directly contacting the circumferential surface of the rotating shaft 32 when the spring 31 are facing the protrusion 32a.

In addition, the protrusion 32a may be wedge-shaped, which may facilitate the spring 31 to switch from directly contacting the circumferential surface of the rotating shaft 32 to contacting the protrusion 32a during the rotation.

In another embodiment, one pin-driving assembly may drive two pins 2. Figure 5b illustrate a structure diagram of an exemplary pin-driving assembly according to this embodiment. As shown in Figure 5b, the pin-driving assembly may include two springs 31, a motor 33 and two rotating shafts 32 which are a first rotating shaft and a second rotating shaft. Each of the two pins 2 may have one-to-one correspondence with a spring 31 and a rotating shaft 32. Each of the rotating shafts 32 may be a cylinder having two protrusions on its circumferential surface: a first protrusion 32a and a second protrusion 32b. The motor 33 may include a driving shaft. Both rotating shafts 32 are coaxially installed on the driving shaft of the motor 33. The upper end of each spring 31 is connected with its corresponding pin 2, and the lower end of each spring 31 is in contact with its corresponding rotating shaft 32.

The control signal may control the motor 33 to rotate, which may drive the rotating shafts 32 to rotate. The first protrusion 32a of the first rotating shaft 32 and the first protrusion 32a of the second rotating shaft 32 may be configured at different locations on the circumferential surfaces of the two rotating shafts 32. That is, along with the rotation of the rotating shafts 32, the two first protrusions 32a may contact their corresponding springs 31 at different times and separate with their corresponding springs 31 at the different times. Further, the second protrusion 32b of the first rotating shaft 32 and the second protrusion 32b of the second rotating shaft 32 may be configured at same locations on the circumferential surfaces of the two rotating shafts 32. That is, along with the rotation of the rotating shafts 32, the two second protrusions 32b may contact their corresponding springs 31 at the same time and separate with their corresponding springs 31 at the same time.

As shown in Figure 5b, along with the rotation of the rotating shaft 32, each spring 31 may switch between directly contacting the circumferential surface of the rotating shaft 32 and indirectly contacting the circumferential surface of the rotating shaft 32 through the first protrusion 32a or the second protrusion 32b. When the spring 31 directly contacts the circumferential surface of its corresponding rotating shaft 32, the corresponding pin 2 may move downward under gravity and the pin 2 is not projected outside the display panel 11, as shown on the right of Figure 5b. When the spring 31 indirectly contacts the circumferential surface of the rotating shaft 32 through the protrusion 32a, its corresponding pin 2 may move upward under an elastic force of the spring 31, and the pin 2 may raise above the display panel 11, as shown on the left of Figure 5b.

Further, as shown in Figure 5b, the rotation of the motor 33 may drive the rotating shafts 32 to rotate, which brings the protrusions 32b configured at same locations to contact the springs 31 at the same time, and the two pins 2 may raise above the display panel 11 together. Moreover, the rotation of the motor 33 may drive the rotating shafts 32 to rotate, which brings the first protrusion 32a on the first rotating shaft 32 to contact the corresponding spring 31, while the first protrusion 32a and the second protrusion 32b on the second rotating shaft 32 do not contact the corresponding spring 31. Thus, a first pin 2 (i.e., pin 2 on the left in Figure 5b) raise above the display panel 11, and the second pin 2 (i.e., pin 2 on the right in Figure 5b) stays below the surface of the display panel 11. When the motor 33 rotates and two springs 31 are both directly contacting the circumferential surface of the rotating shafts 32, two pins 2 are both below the surface of the display panel 11.

It should be noted that in other embodiments, the two springs 31 may be substituted by other types of elastic member or connector. The elastic member or the connector may be configured between the pin 2 and its corresponding rotating shaft 32. An upper end of the elastic member or the connector is connected with the pin 2, and a lower end of the elastic member or the connector is in contact with the rotating shaft 32. Thus, the pin 2 may switch between the raised state and the flat state as its corresponding rotating shaft 32 rotates.

Further, in some embodiments, the pin-driving assembly may not include the two springs 31. In other words, the pin-driving assembly may be comprised of the two rotating shafts 32 and the motor 33. The lower end of the pin 2 may directly contact its corresponding rotating shaft 32. When the lower end of the pin 2 contacts the first protrusion 32a or the second protrusions 32b on the circumferential surface of its corresponding rotating shaft 32, the pin 2 is raised above the display panel 11. When the lower end of the pin 2 directly contacts the circumferential surface of its corresponding rotating shaft 32, the pin 2 is at the flat state. Thus, two pins 2 may be driven by the pin-driving assembly to switch between the flat state and the raised state as the two rotating shafts 32 rotate.

It should be noted that, the same principle may be applied to a pin-driving assembly for driving three or more pins with similar structures.

In some embodiments, as shown in Figures 5a and 5b, a pin 2 may further include two or more stopping-blocks 21 configured on its side wall. The stopping-block 21 may prevent the pin 2 from completely popping out of the display panel 11 under the elastic force of the spring 31. Further, the stopping blocks 21 may be configured at a same height on the side wall of each pin 2. Thus, the pins 2 above the display panel 11 may have a uniform raised height.

Returning to Figure 4, pins 2 above the display panel 11 and pins 2 below the display panel may form arrays with alternating raised and lowered cells on the display panel 11, which may present braille information. Visually impaired users may touch the display panel 11 and obtain the displayed information.

It is understood that the braille display module may be implemented by common components such as pins, springs, rotating shafts and motors, the cost of the braille display module may be reduced. In addition, one motor may control a plurality of neighboring pins, which may further reduce production cost.

In some embodiments, the braille display module 203 may include a raised dot array formed by a plurality of piezoelectric units. Using the piezo effect, when a voltage is applied to a piezo unit based on the control signal, the piezo unit may expand in volume, and display effects as a raised dot.

Returning to Figure 2, the control module 202 may further include a braille conversion unit and a control signal conversion unit. The braille conversion unit may be configured to convert the to-be-displayed information into braille information. The control signal conversion unit may be configured to convert the braille information to control signals.

In some embodiments, the braille conversion unit may further be configured to store mapping relationships between text information and braille information, and convert the to-be-displayed information to braille information based on the stored mapping relationships. For example, the mapping relationships between text information and braille information may be stored in a table. The table may support multiple languages. That is, an English alphabet may have mapping relationships with braille characters according to English braille customs; a Chinese character may have mapping relationships with braille characters according to Chinese braille customs.

The control signal conversion unit may further be configured to store correspondence relationships between braille information and control signals, and convert the braille information to corresponding control signals based on the stored correspondence relationships. The control signals may control the motors of the pin-driving assemblies to rotate certain degrees to raise some pins or lower some pins for presenting the displayed information.

Further, when the information cannot be completely shown in one setting on the display panel 11, the control module 202 may be configured to convert the information into multiple batches of control signals, each batch of control signals corresponding to one setting of the braille display module 203.

In one embodiment, the control module 202 may send one batch of control signals at a set time interval. Thus the braille display module 203 may refresh the setting and display the information at a set speed. For example, the display panel 11 may be configured to show 140 characters at one setting. The information may include 200 characters. The control module 302 may convert the information into 2 batches of control signals and send each batch of control signals at every 30 seconds. The braille display module 303 may receive the first batch of control signals to display the first 140 characters at a first setting, and after 30 seconds, to display the remaining 60 characters at a second setting.

In another embodiment, the control module 302 may further include one or more control buttons, such as a "previous page" button and a "next page" button. For example, the user may select to turn to a next page. The control module 202 may send a next batch of control signals when receiving the instruction.

The communication module 201 may include at least one of an infrared communication module, a Bluetooth communication module, and a wireless fidelity (WiFi) module. It is understood that, the components of the communication module 201 (such as the infrared communication module, the Bluetooth communication module, and the WiFi module) are commonly used, thus the implementation cost may be low.

The audio module 204 may be configured to broadcast the displayed information through audio. Compared to the braille display, audio broadcasting may be simpler, more convenient and faster, and may enhance efficiency and convenience for visually impaired users to obtain information in a quiet environment. Meanwhile, the braille display may ensure visually impaired users to obtain desired information in a noisy environment. The audio module 204 may be implemented by an audio chip and a speaker, which is simple, convenient, and economic.

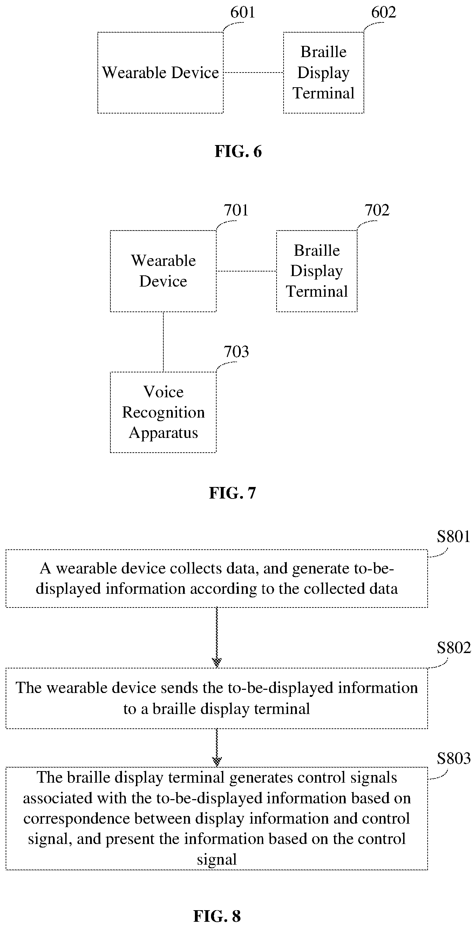

Figure 6 illustrates a structure diagram of an exemplary braille display system according to various embodiments of the present disclosure. As shown in Figure 6, the braille display system 600 may include a wearable device 601 and a braille display terminal 602.

The wearable device 601 may be configured to collect data and generate to-be-displayed information based on the collected data. The braille display terminal 602 may be the braille display terminal 200 or the braille display terminal 300 illustrated in Figure 2 or Figure 3 according to previously described embodiments.

In operation, the wearable device 601 may collect data, generate to-be-displayed information based on the collected data, and send the to-be-displayed information to the braille display terminal 602. The braille display terminal 602 may receive the to-be-displayed information, and present the information in braille characters. Therefore, information may be automatically presented to the visually impaired users. The braille display system may allow the visually impaired users to acquire desired information without help from others, and is thus convenient to use. Further, data collection is implemented by the wearable device, which is convenient to carry around.

Figure 7 illustrates a structure diagram of another exemplary braille display system according to various embodiments of the present disclosure. As shown in Figure 7, the braille display system 700 may include a wearable device 701, a braille display terminal 702, and a voice recognition apparatus 703.

The wearable device 701 may be configured to collect data and generate to-be-displayed information based on the collected data. The braille display terminal 702 may be the braille display terminal 200 or the braille display terminal 300 illustrated in Figure 2 or Figure 3 according to previously described embodiments.

In operation, the wearable device 701 may collect data, generate to-be-displayed information based on the collected data, and send the to-be-displayed information to the braille display terminal. The braille display terminal 702 may receive the to-be-displayed information, and present the information in braille. Therefore, information may be automatically presented to the visually impaired users. The braille display system may allow the visually impaired users to acquire desired information without help from others, and is thus convenient to use. Further, data collection is implemented by the wearable device, which is convenient to carry around.

Further, the wearable device 701 may include, but not limited to, at least one of a smart collar, a smart headset, smart glasses, a smart ring, and a smart watch. The wearable device 701 may be any appropriate wearable device that collects and transmits data. By directly using a wearable device to collect data, the implementation cost may be reduced.

The to-be-displayed or the displayed information may include, but not limited to, at least one of position information, navigation information, road information, environmental information, and weather information. The information may be any information collected by the wearable device. It is understood that, such information may include various types of information, to meet various needs of the visually impaired population.

For example, the smart glasses may be configured to include a camera to obtain image information of the road surface and the surrounding environment. The smart watch may be configured with a global positioning system (GPS) to obtain the location of the visually impaired users. The smart ring may be configured with range finder to obtain information about nearby obstacles. The smart collar may be configured with sensors to obtain weather information.

The voice recognition apparatus 703 may be configured to receive audio information from a user and generate data retrieving instructions based on the received audio information. The wearable device 701 may be further configured to generate to-be-displayed information based on the data retrieving instruction.

In operation, the wearable device 701 may directly collect data based on the data retrieving instruction and generate to-be-displayed information based on the data retrieving instruction. Alternatively, the wearable device 701 may store collected data and generate to-be-displayed information according to the stored data when receiving the data retrieving instruction.

The voice recognition apparatus 703 may be implemented by an audio chip and a microphone, which is simple, convenient and economic. The voice recognition apparatus 703 may allow visually impaired users to express their desired information conveniently, and may enhance efficiency and convenience for visually impaired users to obtain information.

The voice recognition apparatus 703 may be a separate apparatus, or may be integrated into the braille display terminal 702 or the wearable device 701 such as a smart headset. For example, the voice recognition apparatus 703 may be integrated with the audio module 304 in the braille display terminal. A user may use voice commands to refresh the information on the braille display module 303, or to display a next page of information on the braille display module 303.

Figure 8 illustrates a structure diagram of an exemplary braille display process according to various embodiments of the present disclosure. The process may be used in the braille display system shown in Figure 6 or 7. The process may include the following steps.

A wearable device may collect data and generate to-be-displayed information based on the collected data (S801). The wearable device may send the to-be-displayed information to the braille display terminal (S802). The braille display terminal may generate control signals corresponding to the to-be-displayed information, and present the information in braille based on the control signals (S803).

In operation, the wearable device may collect data, generate to-be-displayed information based on the collected data, and send the to-be-displayed information to the braille display terminal. The braille display terminal may receive the to-be-displayed information, and present the information in braille. Therefore, the visually impaired users may acquire desired information automatically generated by the braille display system, which is very convenient to use. Further, data collection is implemented by the wearable device, which is convenience to carry around.

The wearable device and the voice recognition apparatus may be integrated with the braille display terminal. In some embodiments, the wearable device, the voice recognition apparatus, and the braille display terminal may be implemented as a one-piece system. For example, the wearable device may be a pair of glasses. The voice recognition system may be a microphone piece fully attached to or integrated with the glasses (e.g., one leg of the glasses). The braille display terminal may be a touch terminal fully attached to or integrated with the glasses (e.g., one leg of the glasses).

In some embodiments, a user can set up the wearable device, the voice recognition apparatus, and the braille display terminal to be configured either as a one-piece system or a multi-piece system. For example, the wearable device, the voice recognition apparatus, and the braille display terminal may include adaptors that would allow one piece to be plugged into another. A user may plug in the voice recognition apparatus into a wearable device, such as a pair of glasses. The user may choose to not plug in the braille display terminal with the wearable device. The separate pieces may then communicate wirelessly to each other. In another example, the user may plug in the voice recognition apparatus and the braille display terminal together with the wearable device.

In various embodiments, the disclosed modules for the exemplary system as depicted above can be configured in one device or configured in multiple devices as desired. The modules disclosed herein can be integrated in one module or in multiple modules for processing messages. Each of the modules disclosed herein can be divided into one or more sub-modules, which can be recombined in any manners.

The disclosed embodiments are examples only. One of ordinary skill in the art would appreciate that suitable software and/or hardware (e.g., a universal hardware platform) may be included and used to perform the disclosed methods. For example, the disclosed embodiments can be implemented by hardware only, which alternatively can be implemented by software only or a combination of hardware and software. The software can be stored in a storage medium. The software can include suitable commands to enable any client device (e.g., including a digital camera, a smart terminal, a server, or a network device, etc.) to implement the disclosed embodiments.

Other embodiments of the disclosure will be apparent to those skilled in the art from consideration of the specification and practice of the invention disclosed herein. It is intended that the specification and examples be considered as exemplary only, the scope of the invention being indicated by the claims.

## Claims

1. A braille display module (203, 303), comprising:
a display panel (11);
a plurality of pins (2); and
a plurality of pin-driving assemblies;
wherein:
each pin-driving assembly corresponds with at least one pin (2) and is for driving the at least one pin (2);
the plurality of pins (2) are arranged at the display panel (11) in an array form; and
a pin (2) is driven by a corresponding pin-driving assembly to raise above the display panel (11) to present information based on a control signal,
each of the plurality of pin-driving assemblies comprises one or more rotating shafts (32) and a motor (33),
the pin-driving assembly further comprises one or more elastic members, each elastic member corresponding to one rotating shaft (32);
**characterised in that** an upper end of each elastic member is connected with a corresponding pin (2), a lower end of the elastic member is in contact with the corresponding rotating shaft (32), and a solid plate (31a) is configured at the lower end of the elastic member.

2. The braille display module (203, 303) according to claim 1, wherein
the pin-driving assembly comprises one rotating shaft (32) and the motor (33),
the rotating shaft (32) having a protrusion (32a) on a circumferential surface;
the rotating shaft (32) being coaxially installed on a driving shaft of the motor (33); and
a lower end of one pin (2) contacting the rotating shaft (32) so that the one pin (2) is driven by the pin-driving assembly,
optionally, the pin-driving assembly comprises:
two rotating shafts (32), each having a first protrusion (32a) and a second protrusion (32b) on a circumferential surface; and
the motor (33),
each of two pins (2) corresponding with one of the two rotating shafts (32);
the first protrusions (32a) of the two rotating shafts (32) being at different locations on the circumferential surfaces of the two rotating shafts (32);
the second protrusions of the two rotating shafts (32) being at a same location on the circumferential surfaces of the two rotating shafts (32);
the two rotating shafts (32) being coaxially installed on a driving shaft of the motor (33); and
a lower end of each of the two pins (2) being respectively pushed by one of the two rotating shafts (32) such that the two pins (2) are driven by the pin-driving assembly.

3. The braille display module (203, 303) according to claim 1, wherein the plurality of pin-driving assemblies are a plurality of piezoelectric units; and
when a voltage is applied to a piezo unit based on the control signal, the piezo unit expands in volume, and drives a pin (2) corresponding to the piezo unit to raise above the display panel (11).

4. A braille display terminal (200, 300), comprising:
a communication module (201, 301) for receiving to-be-displayed information;
a control module (202, 302) for generating control signals corresponding to the to-be-displayed information; and
a braille display module (203, 303) for displaying information based on the control signals, wherein:
the braille display module (203, 303) comprises a display panel (11), a plurality of pins (2), and a plurality of pin-driving assemblies;
each pin-driving assembly corresponds with at least one pin (2) and is for driving the at least one pin (2);
the plurality of pins (2) are arranged at the display panel (11) in an array form; and
a pin (2) is driven by a corresponding pin-driving assembly to raise above the display panel (11) to present the information based on the control signals, and
each of the plurality of pin-driving assemblies comprises one or more rotating shafts (32) and a motor (33),
the pin-driving assembly further comprises one or more elastic members, each elastic member corresponding to one rotating shaft (32);
**characterised in that** an upper end of each elastic member is connected with a corresponding pin (2), a lower end of the elastic member is in contact with the corresponding rotating shaft (32), and a solid plate (31a) is configured at the lower end of the elastic member.

5. The braille display terminal (200, 300) according to claim 4, wherein
the pin-driving assembly comprises one rotating shaft (32) and the motor (33),
the rotating shaft (32) having a protrusion (32a) on a circumferential surface,
the rotating shaft (32) being coaxially installed on a driving shaft of the motor (33), and
a lower end of one pin (2) being pushed by the rotating shaft (32) such that the one pin (2) is driven by the pin-driving assembly,
optionally, the pin-driving assembly comprises:
two rotating shafts (32), each having a first protrusion (32a) and a second protrusion (32b) on a circumferential surface of the rotating shaft (32); and
the motor (33),
each of two pins (2) corresponding with one of the two rotating shafts (32);
the first protrusions (32a) of the two rotating shafts (32) being at different locations on the circumferential surfaces of the two rotating shafts (32);
the second protrusions of the two rotating shafts (32) being at a same location on the circumferential surfaces of the two rotating shafts (32);
the two rotating shafts (32) being coaxially installed on a driving shaft of the motor (33); and
a lower end of each of the two pins (2) being respectively pushed by one of the two rotating shafts (32) such that the two pins (2) are driven by the pin-driving assembly.

6. The braille display terminal (200, 300) according to claim 4, wherein the plurality of pin-driving assemblies are a plurality of piezoelectric units; and
when a voltage is applied to a piezo unit based on the control signals, the piezo unit expands in volume, and drives a pin (2) corresponding to the piezo unit to raise above the display panel (11).

7. The braille display terminal (200, 300) according to claim 5, wherein:
a pin (2) has stopping-blocks (21) on a side wall of the pin (2).

8. The braille display terminal (200, 300) according to any one of claims 4 to 6, wherein the control module (202, 302) further comprises:
a braille conversion unit for converting the to-be-displayed information into braille information; and
a control signal conversion unit for converting the braille information to the control signals,
optionally, the communication module (201, 301) further comprises one of an infrared communication module, a Bluetooth communication module, and a wireless fidelity (WiFi) module,
optionally, the braille display terminal (300) further comprises:
an audio module (204) for broadcasting displayed information.

9. A braille display system, comprising:
a wearable device (601, 701) for collecting data and generating to-be-displayed information based on the collected data; and
a braille display terminal (602, 702), comprising:
a communication module (201, 301) for receiving the to-be-displayed information from the wearable device (601, 701);
a control module (202, 302) for generating control signals corresponding to the to-be-displayed information; and
a braille display module (203, 303) for displaying information based on the control signals,
wherein:
the braille display module (203, 303) comprises a display panel (11), a plurality of pins (2), and a plurality of pin-driving assemblies;
each pin-driving assembly corresponds with at least one pin (2) and drives the at least one pin (2);
the plurality of pins (2) are arranged at the display panel (11) in an array form; and
a pin (2) is driven by a corresponding pin-driving assembly to raise above the display panel (11) to present the information based on the control signals, and
each of the plurality of pin-driving assemblies comprises one or more rotating shafts (32) and a motor (33),
the pin-driving assembly further comprises one or more elastic members, each elastic member corresponding to one rotating shaft (32);
**characterised in that** an upper end of each elastic member is connected with a corresponding pin (2), a lower end of the elastic member is in contact with the corresponding rotating shaft (32), and a solid plate (31a) is configured at the lower end of the elastic member.

10. The braille display system according to claim 9, wherein
the pin-driving assembly comprises one rotating shaft (32) and the motor (33),
the rotating shaft (32) having a protrusion (32a) on a circumferential surface;
the rotating shaft (32) being coaxially installed on a driving shaft of the motor (33); and
a lower end of one pin (2) being pushed by the rotating shaft (32) such that the one pin (2) is driven by the pin-driving assembly,
optionally, the pin-driving assembly comprises:
two rotating shafts (32), each having a first protrusion (32a) and a second protrusion (32b) on a circumferential surface of the rotating shaft (32); and
a motor (33),
each of two pins (2) corresponding with one of the two rotating shafts (32);
the first protrusions (32a) of the two rotating shafts (32) being at different locations on the circumferential surfaces of the two rotating shafts (32);
the second protrusions of the two rotating shafts (32) being at a same location on the circumferential surfaces of the two rotating shafts (32);
the two rotating shafts (32) being coaxially installed on a driving shaft of the motor (33); and
a lower end of each of the two pins (2) being respectively pushed by one of the two rotating shafts (32) such that the two pins (2) are driven by the pin-driving assembly.

11. The braille display system according to claim 9, wherein the plurality of pin-driving assemblies are a plurality of piezoelectric units; and
when a voltage is applied to a piezo unit based on the control signals, the piezo unit expands in volume, and drives a pin (2) corresponding to the piezo unit to raise above the display panel (11).

12. The braille display system according to of claim 10, wherein:
a pin (2) has stopping-blocks (21) on a side wall of the pin (2).

13. The braille display system according to any one of claims 9 to 11, wherein the control module (202, 302) further comprises:
a braille conversion unit for converting the to-be-displayed information into braille information; and
a control signal conversion unit for converting the braille information to the control signals,
optionally, the communication module (201, 301) further comprises one of an infrared communication module, a Bluetooth communication module, and a wireless fidelity (WiFi) module,
optionally, the braille display system further comprises:
an audio module (204) for broadcasting the displayed information,
optionally, the wearable device (601, 701) includes at least one of a smart collar, a smart headset, smart glasses, a smart ring, and a smart watch,
optionally, wherein the to-be-displayed information includes at least one of a position information, a navigation information, a road information, an environmental information, and a weather information,
optionally, the braille display system further comprises:
a voice recognition apparatus (703) for receiving audio information from a user and generating a data retrieving instruction based on the received audio information,
wherein the wearable device (701) further generates the to-be-displayed information based on the data retrieving instruction, preferably the voice recognition apparatus (703) is fully integrated with the wearable device (701),
optionally, the wearable device (601, 701) collects data, generates to-be-displayed information based on the collected data, and sends the to-be-displayed information to a braille display terminal (602, 702); and
the braille display terminal (602, 702) generates control signals corresponding to the to-be-displayed information, and presents information based on the control signals.

## Patentansprüche

1. Brailleanzeigemodul (203, 303), aufweisend:
eine Anzeigetafel (11);
mehrere Stifte (2); und
mehrere Stiftantriebsbaugruppen;
wobei:
jede Stiftantriebsbaugruppe mindestens einem Stift (2) entspricht und zum Ansteuern des mindestens einen Stifts (2) dient;
die mehreren Stifte (2) an der Anzeigetafel (11) in Form eines Arrays angeordnet sind; und
ein Stift (2) durch eine entsprechende Stiftantriebsbaugruppe angetrieben wird, so dass er sich über die Anzeigetafel (11) erhebt, um Informationen auf der Grundlage eines Steuersignals darzustellen,
jede der mehreren Stiftantriebsbaugruppen eine oder mehrere Drehwellen (32) und einen Motor (33) aufweist,
die Stiftantriebsbaugruppe ferner ein oder mehrere elastische Glieder aufweist, wobei jedes elastische Glied einer Drehwelle (32) entspricht;
**dadurch gekennzeichnet, dass**
ein oberes Ende jedes elastischen Glieds mit einem entsprechenden Stift (2) verbunden ist, ein unteres Ende des elastischen Glieds in Berührung mit der entsprechenden Drehwelle (32) steht und an dem unteren Ende des elastischen Glieds eine massive Platte (31a) gebildet ist.

2. Brailleanzeigemodul (203, 303) nach Anspruch 1, wobei
die Stiftantriebsbaugruppe eine Drehwelle (32) und den Motor (33) aufweist,
die Drehwelle (32) an einer Umfangsfläche einen Vorsprung (32a) hat;
die Drehwelle (32) koaxial auf einer Antriebswelle des Motors (33) installiert ist; und
ein unteres Ende eines Stifts (2) die Drehwelle (32) berührt, so dass der eine Stift (2) von der Stiftantriebsbaugruppe angetrieben wird,
wobei die Stiftantriebsbaugruppe optional aufweist:
zwei Drehwellen (32), die an einer Umfangsfläche jeweils einen ersten Vorsprung (32a) und einen zweiten Vorsprung (32b) haben; und
den Motor (33),
wobei jeder von zwei Stiften (2) einer der zwei Drehwellen (32) entspricht;
die ersten Vorsprünge (32a) der zwei Drehwellen (32) sich an den Umfangsflächen der zwei Drehwellen (32) an unterschiedlichen Stellen befinden;
die zweiten Vorsprünge der zwei Drehwellen (32) sich an den Umfangsflächen der zwei Drehwellen (32) an derselben Stelle befinden;
die zwei Drehwellen (32) koaxial auf einer Antriebswelle des Motors (33) installiert sind; und
ein unteres Ende jedes der zwei Stifte (2) jeweils von einer der zwei Drehwellen (32) gedrückt wird, so dass die zwei Stifte (2) von der Stiftantriebsbaugruppe angetrieben werden.

3. Brailleanzeigemodul (203, 303) nach Anspruch 1, wobei die mehreren Stiftantriebsbaugruppen mehrere piezoelektrische Einheiten sind; und
wenn auf der Grundlage des Steuersignals eine Spannung an eine Piezoeinheit angelegt wird, sich die Piezoeinheit im Volumen ausdehnt und einen der Piezoeinheit entsprechenden Stift (2) antreibt, so dass er sich über die Anzeigetafel (11) erhebt.

4. Brailleanzeigeendgerät (200, 300), aufweisend:
ein Kommunikationsmodul (201, 301) zum Empfangen von anzuzeigenden Informationen;
ein Steuermodul (202, 302) zum Erzeugen von Steuersignalen entsprechend der anzuzeigenden Informationen; und
ein Brailleanzeigemodul (203, 303) zum Anzeigen von Informationen auf der Grundlage der Steuersignale,
wobei:
das Brailleanzeigemodul (203, 303) eine Anzeigetafel (11), mehrere Stifte (2) und mehrere Stiftantriebsbaugruppen aufweist;
jede Stiftantriebsbaugruppe mindestens einem Stift (2) entspricht und zum Antreiben des mindestens einen Stifts (2) dient;
die mehreren Stifte (2) an der Anzeigetafel (11) in Form eines Arrays angeordnet sind; und
ein Stift (2) durch eine entsprechende Stiftantriebsbaugruppe angetrieben wird, so dass er sich über die Anzeigetafel (11) erhebt, um die Informationen auf der Grundlage der Steuersignale darzustellen, und
jede der mehreren Stiftantriebsbaugruppen eine oder mehrere Drehwellen (32) und einen Motor (33) aufweist,
die Stiftantriebsbaugruppe ferner ein oder mehrere elastische Glieder aufweist, wobei jedes elastische Glied einer Drehwelle (32) entspricht;
**dadurch gekennzeichnet, dass**
ein oberes Ende jedes elastischen Glieds mit einem entsprechenden Stift (2) verbunden ist, ein unteres Ende des elastischen Glieds in Berührung mit der entsprechenden Drehwelle (32) steht und am unteren Ende des elastischen Glieds eine massive Platte (31a) gebildet ist.

5. Brailleanzeigeendgerät (200, 300) nach Anspruch 4, wobei
die Stiftantriebsbaugruppe eine Drehwelle (32) und den Motor (33) aufweist,
die Drehwelle (32) an einer Umfangsfläche einen Vorsprung (32a) hat,
die Drehwelle (32) koaxial auf einer Antriebswelle des Motors (33) installiert ist, und
ein unteres Ende eines Stifts (2) von der Drehwelle (32) gedrückt wird, so dass der eine Stift (2) von der Stiftantriebsbaugruppe angetrieben wird,
wobei die Stiftantriebsbaugruppe optional aufweist:
zwei Drehwellen (32), die an einer Umfangsfläche der Drehwelle (32) jeweils einen ersten Vorsprung (32a) und einen zweiten Vorsprung (32b) haben; und
den Motor (33),
wobei jeder von zwei Stiften (2) einer der zwei Drehwellen (32) entspricht;
die ersten Vorsprünge (32a) der zwei Drehwellen (32) sich an den Umfangsflächen der zwei Drehwellen (32) an unterschiedlichen Stellen befinden;
die zweiten Vorsprünge der zwei Drehwellen (32) sich an den Umfangsflächen der zwei Drehwellen (32) an derselben Stelle befinden;
die zwei Drehwellen (32) koaxial auf einer Antriebswelle des Motors (33) installiert sind; und
ein unteres Ende jedes der zwei Stifte (2) jeweils von einer der zwei Drehwellen (32) gedrückt wird, so dass die zwei Stifte (2) von der Stiftantriebsbaugruppe angetrieben werden.

6. Brailleanzeigeendgerät (200, 300) nach Anspruch 4, wobei die mehreren Stiftantriebsbaugruppen mehrere piezoelektrische Einheiten sind; und
wenn auf der Grundlage des Steuersignals eine Spannung an eine Piezoeinheit angelegt wird, sich die Piezoeinheit im Volumen ausdehnt und einen der Piezoeinheit entsprechenden Stift (2) antreibt, so dass er sich über die Anzeigetafel (11) erhebt.

7. Brailleanzeigeendgerät (200, 300) nach Anspruch 5, wobei:
ein Stift (2) an einer Seitenwand des Stifts (2) Anschlagblöcke (21) hat.

8. Brailleanzeigeendgerät (200, 300) nach einem der Ansprüche 4 bis 6, wobei das Steuermodul (202, 302) ferner aufweist:
eine Brailleumwandlungseinheit zum Umwandeln der anzuzeigenden Informationen in Brailleinformationen; und
eine Steuersignalumwandlungseinheit zum Umwandeln der Brailleinformationen in die Steuersignale,
wobei das Kommunikationsmodul (201, 301) optional ferner eines von einem Infrarot-Kommunikationsmodul, einem Bluetooth-Kommunikationsmodul und einem Wireless-Fidelity-Modul (WiFi) umfasst,
das Brailleanzeigeendgerät (300) optional ferner aufweist:
ein Audiomodul (204) zum Übertragen der angezeigten Informationen.

9. Brailleanzeigesystem, aufweisend:
eine tragbare Vorrichtung (601, 701) zum Sammeln von Daten und zum Erzeugen von anzuzeigenden Informationen auf der Grundlage der gesammelten Daten; und
ein Brailleanzeigeendgerät (602, 702), aufweisend:
ein Kommunikationsmodul (201, 301) zum Empfangen der anzuzeigenden Informationen von der tragbaren Vorrichtung (601, 701);
ein Steuermodul (202, 302) zum Erzeugen von Steuersignalen, die den anzuzeigenden Informationen entsprechen; und
ein Brailleanzeigemodul (203, 303) zum Anzeigen von Informationen auf der Grundlage der Steuersignale,
wobei:
das Brailleanzeigemodul (203, 303) eine Anzeigetafel (11), mehrere Stifte (2) und mehrere Stiftantriebsbaugruppen aufweist;
jede Stiftantriebsbaugruppe mindestens einem Stift (2) entspricht und den mindestens einen Stift (2) antreibt;
die mehreren Stifte (2) in Form eines Arrays an der Anzeigetafel (11) angeordnet sind; und
ein Stift (2) durch eine entsprechende Stiftantriebsbaugruppe angetrieben wird, so dass er sich über die Anzeigetafel (11) erhebt, um die Informationen auf der Grundlage der Steuersignale darzustellen, und
jede der mehreren Stiftantriebsbaugruppen eine oder mehrere Drehwellen (32) und einen Motor (33) aufweist,
die Stiftantriebsbaugruppe ferner ein oder mehrere elastische Glieder aufweist, wobei jedes elastische Glied einer Drehwelle (32) entspricht;
**dadurch gekennzeichnet, dass**
ein oberes Ende jedes elastischen Glieds mit einem entsprechenden Stift (2) verbunden ist, ein unteres Ende des elastischen Glieds in Berührung mit der entsprechenden Drehwelle (32) steht und an dem unteren Ende des elastischen Glieds eine massive Platte (31a) gebildet ist.

10. Brailleanzeigesystem nach Anspruch 9, wobei
die Stiftantriebsbaugruppe eine Drehwelle (32) und den Motor (33) aufweist,
die Drehwelle (32) an einer Umfangsfläche einen Vorsprung (32a) hat;
die Drehwelle (32) koaxial auf einer Antriebswelle des Motors (33) installiert ist; und
ein unteres Ende eines Stifts (2) von der Drehwelle (32) gedrückt wird, so dass der eine Stift (2) von der Stiftantriebsbaugruppe angetrieben wird,
wobei die Stiftantriebsbaugruppe optional aufweist:
zwei Drehwellen (32), die an einer Umfangsfläche der Drehwelle (32) jeweils einen ersten Vorsprung (32a) und einen zweiten Vorsprung (32b) haben; und
einen Motor (33),
wobei jeder von zwei Stiften (2) einer der zwei Drehwellen (32) entspricht;
die ersten Vorsprünge (32a) der zwei Drehwellen (32) sich an den Umfangsflächen der zwei Drehwellen (32) an unterschiedlichen Stellen befinden;
die zweiten Vorsprünge der zwei Drehwellen (32) sich an den Umfangsflächen der zwei Drehwellen (32) an derselben Stelle befinden;
die zwei Drehwellen (32) koaxial auf einer Antriebswelle des Motors (33) installiert sind; und
ein unteres Ende jedes der zwei Stifte (2) jeweils von einer der zwei Drehwellen (32) gedrückt wird, so dass die zwei Stifte (2) von der Stiftantriebsbaugruppe angetrieben werden.

11. Brailleanzeigesystem nach Anspruch 9, wobei die mehreren Stiftantriebsbaugruppen mehrere piezoelektrische Einheiten sind; und
wenn auf der Grundlage des Steuersignals eine Spannung an eine Piezoeinheit angelegt wird, sich die Piezoeinheit im Volumen ausdehnt und einen der Piezoeinheit entsprechenden Stift (2) antreibt, so dass er sich über die Anzeigetafel (11) erhebt.

12. Brailleanzeigesystem nach Anspruch 10, wobei:
ein Stift (2) Anschlagblöcke (21) an einer Seitenwand des Stifts (2) hat.

13. Brailleanzeigesystem nach einem der Ansprüche 9 bis 11, wobei das Steuermodul (202, 302) ferner aufweist:
eine Brailleumwandlungseinheit zum Umwandeln der anzuzeigenden Informationen in Brailleinformationen; und
eine Steuersignalumwandlungseinheit zum Umwandeln der Brailleinformationen in die Steuersignale,
das Kommunikationsmodul (201, 301) optional ferner eines von einem Infrarot-Kommunikationsmodul, einem Bluetooth-Kommunikationsmodul und einem Wireless-Fidelity-Modul (WiFi) aufweist,
das Brailleanzeigesystem optional ferner aufweist:
ein Audiomodul (204) zum Übertragen der angezeigten Informationen,
wobei die tragbare Vorrichtung (601, 701) optional mindestens eines von einem intelligenten Halsband, einem intelligenten Headset, einer intelligenten Brille, einem intelligenten Ring und einer intelligenten Uhr beinhaltet,
wobei die anzuzeigenden Informationen optional mindestens eines von Positionsinformationen, Navigationsinformationen, Verkehrsinformationen, Umgebungsinformationen und Wetterinformationen beinhalten,
wobei das Brailleanzeigesystem optional ferner aufweist:
eine Spracherkennungsvorrichtung (703) zum Empfangen von Audioinformationen von einem Benutzer und zum Erzeugen einer Datenabrufanweisung auf der Grundlage der empfangenen Audioinformationen,
wobei die tragbare Vorrichtung (701) ferner die anzuzeigenden Informationen auf der Grundlage der Datenabrufanweisung erzeugt, wobei die Spracherkennungsvorrichtung (703) vorzugsweise vollständig in die tragbare Vorrichtung (701) integriert ist,
die tragbare Vorrichtung (601, 701) optional Daten sammelt, die anzuzeigenden Informationen auf der Grundlage der gesammelten Daten erzeugt und die anzuzeigenden Informationen an ein Brailleanzeigeendgerät (602, 702) sendet; und
das Brailleanzeigeendgerät (602, 702) Steuersignale, die den anzuzeigenden Informationen entsprechen, erzeugt und Informationen auf der Grundlage der Steuersignale darstellt.

## Revendications

1. Module d'affichage en braille (203, 303), comprenant :
un panneau d'affichage (11) ;
une pluralité de broches (2) ; et
une pluralité d'ensembles d'entraînement de broches ;
dans lequel :
chaque ensemble d'entraînement de broche correspond à au moins une broche (2) et sert à entraîner ladite au moins une broche (2) ;
la pluralité de broches (2) sont agencées sur le panneau d'affichage (11) sous une forme de réseau ; et
une broche (2) est entraînée par un ensemble d'entraînement de broches correspondant pour s'élever au-dessus du panneau d'affichage (11) pour présenter des informations sur la base d'un signal de commande,
chaque ensemble de la pluralité d'ensembles d'entraînement de broches comprend un ou plusieurs arbres rotatifs (32) et un moteur (33),
l'ensemble d'entraînement de broche comprend en outre un ou plusieurs éléments élastiques, chaque élément élastique correspondant à un arbre rotatif (32) ;
**caractérisé en ce que**
une extrémité supérieure de chaque élément élastique est reliée à une broche correspondante (2), une extrémité inférieure de l'élément élastique est en contact avec l'arbre rotatif correspondant (32) et une plaque pleine (31a) est configurée à l'extrémité inférieure de l'élément élastique.

2. Module d'affichage en braille (203, 303) selon la revendication 1, dans lequel l'ensemble d'entraînement de broches comprend un arbre rotatif (32) et le moteur (33),
l'arbre rotatif (32) ayant une saillie (32a) sur une surface circonférentielle ; l'arbre rotatif (32) étant installé coaxialement sur un arbre d'entraînement du moteur (33) ;
et
une extrémité inférieure d'une broche (2) entrant en contact avec l'arbre rotatif (32) de sorte que la broche (2) est entraînée par l'ensemble d'entraînement de broche,
de manière optionnelle, l'ensemble d'entraînement des broches comprend :
deux arbres rotatifs (32), chacun ayant une première saillie (32a) et une seconde saillie (32b) sur une surface circonférentielle ; et
le moteur (33),
chacune de deux broches (2) correspondant à l'un des deux arbres rotatifs (32) ;
les premières saillies (32a) des deux arbres rotatifs (32) étant à des emplacements différents sur les surfaces circonférentielles des deux arbres rotatifs (32) ;
les secondes saillies des deux arbres rotatifs (32) étant à un même emplacement sur les surfaces circonférentielles des deux arbres rotatifs (32) ;
les deux arbres rotatifs (32) étant installés coaxialement sur un arbre d'entraînement du moteur (33) ; et
une extrémité inférieure de chacune des deux broches (2) étant respectivement poussée par l'un des deux arbres rotatifs (32) de sorte que les deux broches (2) sont entraînées par l'ensemble d'entraînement de broches.

3. Module d'affichage en braille (203, 303) selon la revendication 1, dans lequel la pluralité d'ensembles d'entraînement de broches est une pluralité d'unités piézoélectriques ; et
lorsqu'une tension est appliquée à une unité piézo sur la base du signal de commande, l'unité piézo se dilate en volume, et entraîne une broche (2) correspondant à l'unité piézoélectrique pour s'élever au-dessus du panneau d'affichage (11).

4. Terminal d'affichage en braille (200, 300), comprenant :
un module de communication (201, 301) pour recevoir des informations à afficher ;
un module de commande (202, 302) pour générer des signaux de commande correspondant aux informations à afficher ; et
un module d'affichage en braille (203, 303) pour afficher des informations sur la base des signaux de commande, dans lequel :
le module d'affichage en braille (203, 303) comprend un panneau d'affichage (11), une pluralité de broches (2) et une pluralité d'ensembles d'entraînement de broches ;
chaque ensemble d'entraînement de broche correspond à au moins une broche (2) et sert à entraîner ladite au moins une broche (2) ;
la pluralité de broches (2) sont agencées sur le panneau d'affichage (11) sous une forme de réseau ; et
une broche (2) est entraînée par un ensemble d'entraînement de broches correspondant pour s'élever au-dessus du panneau d'affichage (11) pour présenter les informations sur la base des signaux de commande, et
chaque ensemble de la pluralité d'ensembles d'entraînement de broches comprend un ou plusieurs arbres rotatifs (32) et un moteur (33), l'ensemble d'entraînement de broches comprend en outre un ou plusieurs éléments élastiques, chaque élément élastique correspondant à un arbre rotatif (32) ;
**caractérisé en ce que**
une extrémité supérieure de chaque élément élastique est reliée à une broche correspondante (2), une extrémité inférieure de l'élément élastique est en contact avec l'arbre rotatif correspondant (32) et une plaque pleine (31a) est configurée à l'extrémité inférieure de l'élément élastique.

5. Terminal d'affichage en braille (200, 300) selon la revendication 4, dans lequel
l'ensemble d'entraînement de broches comprend un arbre rotatif (32) et le moteur (33),
l'arbre rotatif (32) ayant une saillie (32a) sur une surface circonférentielle, l'arbre rotatif (32) étant installé coaxialement sur un arbre d'entraînement du moteur (33),
et
une extrémité inférieure d'une broche (2) étant poussée par l'arbre rotatif (32) de telle sorte que la broche (2) est entraînée par l'ensemble d'entraînement de broche,
de manière optionnelle, l'ensemble d'entraînement des broches comprend :
deux arbres rotatifs (32), chacun ayant une première saillie (32a) et une seconde saillie (32b) sur une surface circonférentielle de l'arbre rotatif (32) ; et
le moteur (33),
chacune de deux broches (2) correspondant à l'un des deux arbres rotatifs (32) ;
les premières saillies (32a) des deux arbres rotatifs (32) étant à des emplacements différents sur les surfaces circonférentielles des deux arbres rotatifs (32) ;
les secondes saillies des deux arbres rotatifs (32) étant à un même emplacement sur les surfaces circonférentielles des deux arbres rotatifs (32) ;
les deux arbres rotatifs (32) étant installés coaxialement sur un arbre d'entraînement du moteur (33) ; et
une extrémité inférieure de chacune des deux broches (2) étant respectivement poussée par l'un des deux arbres rotatifs (32) de sorte que les deux broches (2) sont entraînées par l'ensemble d'entraînement de broches.

6. Terminal d'affichage en braille (200, 300) selon la revendication 4, dans lequel la pluralité d'ensembles d'entraînement de broches est une pluralité d'unités piézoélectriques ; et
lorsqu'une tension est appliquée à une unité piézo sur la base des signaux de commande, l'unité piézo se dilate en volume, et entraîne une broche (2) correspondant à l'unité piézoélectrique pour s'élever au-dessus du panneau d'affichage (11).

7. Terminal d'affichage en braille (200, 300) selon la revendication 5, dans lequel :
une broche (2) présente des blocs d'arrêt (21) sur une paroi latérale de la broche (2).

8. Terminal d'affichage en braille (200, 300) selon l'une quelconque des revendications 4 à 6, dans lequel le module de commande (202, 302) comprend en outre :
une unité de conversion en braille pour convertir les informations à afficher en informations en braille ; et
une unité de conversion de signal de commande pour convertir les informations en braille en signaux de commande,
de manière optionnelle, le module de communication (201, 301) comprend en outre l'un des modules parmi un module de communication infrarouge, un module de communication Bluetooth et un module de fidélité sans fil (WiFi),
de manière optionnelle, le terminal d'affichage en braille (300) comprend en outre :
un module audio (204) pour diffuser les informations affichées.

9. Système d'affichage en braille, comprenant :
un dispositif portable (601, 701) pour collecter des données et générer des informations à afficher sur la base des données collectées ; et
un terminal d'affichage en braille (602, 702), comprenant :
un module de communication (201, 301) pour recevoir les informations à afficher du dispositif portable (601, 701) ;
un module de commande (202, 302) pour générer des signaux de commande correspondant aux informations à afficher ; et
un module d'affichage en braille (203, 303) pour afficher des informations sur la base des signaux de commande,
dans lequel :
le module d'affichage en braille (203, 303) comprend un panneau d'affichage (11), une pluralité de broches (2) et une pluralité d'ensembles d'entraînement de broches ;
chaque ensemble d'entraînement de broches correspond à au moins une broche (2) et entraîne ladite au moins une broche (2) ;
la pluralité de broches (2) sont agencées sur le panneau d'affichage (11) sous une forme de réseau ; et
une broche (2) est entraînée par un ensemble d'entraînement de broches correspondant pour s'élever au-dessus du panneau d'affichage (11) pour présenter les informations sur la base des signaux de commande, et
chaque ensemble de la pluralité d'ensembles d'entraînement de broches comprend un ou plusieurs arbres rotatifs (32) et un moteur (33),
l'ensemble d'entraînement de broche comprend en outre un ou plusieurs éléments élastiques, chaque élément élastique correspondant à un arbre rotatif (32);
**caractérisé en ce que**
une extrémité supérieure de chaque élément élastique est reliée à une broche correspondante (2), une extrémité inférieure de l'élément élastique est en contact avec l'arbre rotatif correspondant (32), et
une plaque pleine (31a) est configurée à l'extrémité inférieure de l'élément élastique.

10. Système d'affichage en braille selon la revendication 9, dans lequel l'ensemble d'entraînement de broches comprend un arbre rotatif (32) et le moteur (33),
l'arbre rotatif (32) ayant une saillie (32a) sur une surface circonférentielle ; l'arbre rotatif (32) étant installé coaxialement sur un arbre d'entraînement du moteur (33) ;
et
une extrémité inférieure d'une broche (2) étant poussée par l'arbre rotatif (32) de telle sorte que ladite une broche (2) est entraînée par l'ensemble d'entraînement de broche,
de manière optionnelle, l'ensemble d'entraînement des broches comprend :
deux arbres rotatifs (32), chacun ayant une première saillie (32a) et une seconde saillie (32b) sur une surface circonférentielle de l'arbre rotatif (32) ; et
un moteur (33),
chacune de deux broches (2) correspondant à l'un des deux arbres rotatifs (32) ;
les premières saillies (32a) des deux arbres rotatifs (32) étant à des emplacements différents sur les surfaces circonférentielles des deux arbres rotatifs (32) ;
les secondes saillies des deux arbres rotatifs (32) étant à un même emplacement sur les surfaces circonférentielles des deux arbres rotatifs (32) ;
les deux arbres rotatifs (32) étant installés coaxialement sur un arbre d'entraînement du moteur (33); et
une extrémité inférieure de chacune des deux broches (2) étant respectivement poussée par l'un des deux arbres rotatifs (32) de sorte que les deux broches (2) sont entraînées par l'ensemble d'entraînement de broches.

11. Système d'affichage en braille selon la revendication 9, dans lequel la pluralité d'ensembles d'entraînement de broches est une pluralité d'unités piézoélectriques ; et
lorsqu'une tension est appliquée à une unité piézo sur la base des signaux de commande, l'unité piézo se dilate en volume, et entraîne une broche (2) correspondant à l'unité piézoélectrique pour s'élever au-dessus du panneau d'affichage (11).

12. Système d'affichage en braille selon la revendication 10, dans lequel :
une broche (2) présente des blocs d'arrêt (21) sur une paroi latérale de la broche (2).

13. Système d'affichage en braille selon l'une quelconque des revendications 9 à 11, dans lequel le module de commande (202, 302) comprend en outre :
une unité de conversion en braille pour convertir les informations à afficher en informations en braille ; et
une unité de conversion de signal de commande pour convertir les informations en braille en signaux de commande,
de manière optionnelle, le module de communication (201, 301) comprend en outre un des modules parmi un module de communication infrarouge, un module de communication Bluetooth et un module de fidélité sans fil (WiFi),
de manière optionnelle, le système d'affichage en braille comprend en outre :
un module audio (204) pour diffuser les informations affichées,
de manière optionnelle, le dispositif portable (601, 701) comprend au moins l'un des éléments parmi un collier intelligent, un casque intelligent, des lunettes intelligentes, une bague intelligente et une montre intelligente,
de manière optionnelle, dans lequel les informations à afficher comprennent au moins l'une des informations parmi une information de position, une information de navigation, une information routière, une information environnementale et une information météorologique,
de manière optionnelle, le système d'affichage en braille comprend en outre :
un appareil de reconnaissance vocale (703) pour recevoir des informations audio d'un utilisateur et générer une instruction de récupération de données sur la base des informations audio reçues,
dans lequel le dispositif portable (701) génère en outre les informations à afficher sur la base de l'instruction de récupération de données, de préférence l'appareil de reconnaissance vocale (703) est entièrement intégré au dispositif portable (701),
de manière optionnelle, le dispositif portable (601, 701) collecte des données, génère des informations à afficher sur la base des données collectées, et envoie les informations à afficher à un terminal d'affichage en braille (602, 702) ; et
le terminal d'affichage en braille (602, 702) génère des signaux de commande correspondant aux informations à afficher, et présente des informations sur la base des signaux de commande.
